# EUROPEAN PATENT SPECIFICATION

(11) **EP 4 421 226 B1**
(45) Date of publication and mention of the grant of the patent: **02.12.2026**
(21) Application number: 24158330.1
(22) Date of filing: 19.02.2024
(51) Int. Cl.: D03C 19/00, D03D 49/00, G06F 30/20, G06F 113/12

(54) **METHOD AND SYSTEM FOR FABRIC DESIGN**
VERFAHREN UND SYSTEM ZUM ENTWERFEN VON GEWEBE
PROCÉDÉ ET SYSTÈME DE CONCEPTION DE TISSU

(30) Priority: 27.02.2023 IN 202321013224
(43) Date of publication of application: 28.08.2024
(73) Proprietor: Tata Consultancy Services Limited, Maharashtra (IN)
(72) Inventor: SRINIVASAN, SWARNA, 600096 Chennai, Tamil Nadu (IN); ZAMA, HADIUZ, 600096 Chennai, Tamil Nadu (IN); KONDURU, GURUNATHREDDY, 600086 Chennai, Tamil Nadu (IN); SRIDHAR, PRIYADHARSHINI, 600096 Chennai, Tamil Nadu (IN); RAHA, NILAMBAR, 600096 Chennai, Tamil Nadu (IN)
(74) Representative: Goddar, Heinz J.

(56) References cited:
- CN-A- 114 781 124
- CN-A- 114 960 159
- US-A1- 2022 237 846
- PORTALÉS CRISTINA ET AL: "Virtual Loom: a tool for the interactive 3D representation of historical fabrics", MULTIMEDIA TOOLS AND APPLICATIONS, KLUWER ACADEMIC PUBLISHERS, BOSTON, US, vol. 80, no. 9, 17 January 2021 (2021-01-17), pages 13735 - 13760, XP037433679, ISSN: 1380-7501, [retrieved on 20210117], DOI: 10.1007/S11042-020-10294-W

## Description

### CROSS-REFERENCE TO RELATED APPLICATIONS AND PRIORITY

The present application claims priority to Indian application no. 202321013224, filed on February 27, 2023.

### TECHNICAL FIELD

The disclosure herein generally relates to fabric design, and, more particularly, to a method and system for a configurable loom design that enables personalized fabric designs.

### BACKGROUND

State of the art method and process of designing a fabric and expressing design requirements have been restrictive and incomplete, and are allowing focus on parts of the fabric instead of the whole. These methods often require a designer to look at a motif as a primary unit of the fabric that can be designed as an independent unit, consisting of specific weaving techniques and colors for the warps and wefts that would make up the motif. This is primarily because, in traditional design tools, the motifs are assumed to have repeated over specific areas of the fabric to make up the fabric. Only a designer with a keen sense of a loom's tie up can design a motif and repeat them with the relevant knowledge of the loom to create a fabric that can be woven by the loom. Not all designs can be woven on the loom since the loom's setup and its constituent parts and weaving mechanisms inherently impose certain constraints on what can be woven as a fabric on it.

Further, the traditional representations do not allow full expression of all possible states of the entire loom setup, fabric layout, design requirements, weaving steps and methods, and the resulting fabric output as a whole. Furthermore, state of the art methods of designing a fabric did not take into account the loom model, all its possible components and interconnections, its functions as a single set of interconnected components, states and state-transitions that could work in tandem to produce a single fabric. Existing technologies work in a way where the entire loom mechanism is reduced to only some key essential parts and configurations. For example, a jacquard module alone is modelled as hooks which maybe pre-configured ahead of time. However configuring in this way is limiting, inflexible and insufficient to cover all possible real-world possibilities of fabrics that can be produced on different types of looms, including the handloom. Designs are currently created, edited in parts that are either completely removed from the loom's mechanism or are tightly coupled with the loom lifting mechanism. These design patterns or motifs end up being repeated.

Handloom weaving itself is a dynamic process and has many nuances and intricacies based on how the shuttle is thrown. Traditional jacquard tools find it hard to simulate the handloom's shuttle throw as a second or third or n^{th} shuttle apart from the base fabric in various parts. Tools that exist, are designed to do this within the scope of each motif being designed and subsequently repeated, but not as a whole fabric which may consist of several non-repeating motifs. State of the art approaches could not accurately model different weaving techniques without embedding details in the design itself. So a lay designer would be unable to create something that is weavable without the knowledge of these techniques at design time. As a consequence of all of these limitations, it becomes hard to mass personalize fabrics at scale, where scale implies managing the operations of multitudes of design requirements and looms. Examples include, managing color choices or design choices from a large number of customers simultaneously given the constraints of the multiple available looms. The setup and state of the loom also have a direct impact on what can be woven on the loom without changes to the loom setup; or if changes are required to the setup of the loom, there is a direct impact on the effort and thus the cost required to make changes to the setup. Document (CN114781124A) discloses a three-dimensional orthogonal fabric weaving process modeling method based on a digital unit method, which belongs to the field of fabric modeling and comprises the following steps of S1: establishing a loom key component model by researching a jacquard loom mechanism, and inputting material parameters and loom parameters; s2: constructing a mapping relation between a weaving matrix and a fabric unit cell geometric structure according to the motion rule of warp yarns and binding yarns when the fabric unit cell is woven; s3: establishing a fiber-scale fabric single-cell model under different warp yarn and binding yarn tension ratios by gradually simulating five movements of a loom, and carrying out comparative analysis on the fiber-scale fabric single-cell model and a fabric sample; s4: through simulation and experimental comparison analysis, the influence rule of the warp yarn and binding yarn tension ratio on the thickness, width and reed tension of the fabric is revealed. The method can achieve the effects of simulating and predicting the movement of the fabric weaving process and the fabric micro-geometric structure, and can lay a good theoretical basis for the mechanical property analysis of subsequent fabrics and fabric reinforced composite materials (Abstract).

### SUMMARY

Embodiments of the present disclosure present technological improvements as solutions to one or more of the above-mentioned technical problems recognized by the inventors in conventional systems.

For example, in one embodiment, a processor implemented method is as defined in claim 1.

In yet another aspect, a system is as defined in claim 6.

In yet another aspect, a non-transitory computer readable medium is as defined in claim 11.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for fabric design, according to some embodiments of the present disclosure.
FIGS. 2A and 2B illustrate an example flow diagram depicting steps involved in the process of fabric design, by the system of FIG. 1, according to some embodiments of the present disclosure.
FIG. 3 is a flow diagram illustrating steps involved in the process of simulating a full fabric weave during the fabric design, by the system of FIG. 1, according to some embodiments of the present disclosure.
FIG. 4 illustrates data flow in an example implementation of the system of FIG. 1, for the process of fabric design, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Method and process of designing a fabric and expressing design requirements has been restrictive and incomplete allowing focus on parts of the fabric instead of the whole. The representations do not allow full expression of all possible states of the entire loom setup, fabric layout, design requirements, weaving steps and methods and the resulting fabric output as a whole. Existing methods of designing a fabric did not take into account the loom, all its possible components and interconnections, its functions as a single set of interconnected mathematical components, states and state-transitions that could work in tandem to produce a single fabric. Existing technologies work in a way where the entire loom mechanism is reduced to only some key essential parts and configurations.

Embodiments of the present disclosure present technological improvements as solutions to one or more of the above-mentioned technical problems recognized by the inventors in conventional systems. In a method disclosed in embodiments herein, a plurality of input data is collected, via one or more hardware processors, wherein the plurality of input data comprises loom details, a loom layout configuration, a design loom layout, a design configuration, and a motif. Further, a virtual loom is built, via the one or more hardware processors, using the loom details, wherein building the virtual loom includes building a set of hook objects and a set of reed-fabric objects. Further, a loom layout is built via one or more hardware processors, for building a plurality of sections of the virtual loom, using the loom details and the loom layout configuration. Further, a design layout is built from the design loom layout, via the one or more hardware processors, to create connections between a plurality of beats and shuttles of the virtual loom. Further, a plurality of hook-maps are created from the motif, the design layout, and the design configuration, via the one or more hardware processors, wherein the plurality of hook-maps map a plurality of hook values for each of the plurality of shuttles across a corresponding coverage length. Further, a plurality of hook indices are generated via the one or more hardware processors, wherein the plurality of hook indices is an array used for casting each of a plurality of hook-Ids to the other repeated indices across saree width. Further, a plurality of pedal indices are generated, via the one or more hardware processors, to create a fabric mesh by storing color of a plurality of primary warps. Further, a simulation of a full fabric weave is generated, via the one or more hardware processors, using the design loom layout, the design configuration, the plurality of hook-maps, the plurality of hook-indices, and the plurality of pedal indices.

In another aspect, method of building the loom layout includes initializing a plurality of sections and creating a section class comprising the plurality of sections; obtaining a plurality of loom specific information, wherein for all repeating sections, corresponding data is fetched from pre-existing information; and building a section object with each of a plurality of properties in the loom specific information. The embodiments disclosed herein offer personalization at multiple levels i.e. layout, motifs, color and so on, by mapping one or more user requirements to loom constraints. Each unique design created is a machine readable combination of parameters, that could be verified. Every such saree/ fabric design could be issued as NFT.

The terms such as but not limited to class and object maybe specific to certain design languages/platforms, and this is for explanation purpose only. It is to be noted that the system 100 essentially creates a meta structure template of underlying information, and in a practical implementation, any suitable platform maybe used.

Some standard terms associated with the looms are introduced in Table. 1.

| Serial # | Term | Definition |
|---|---|---|
| 1 | Shuttle | A shuttle is a tool designed to neatly and compactly store a holder that carries the thread of the weft yarn while weaving with a loom. Shuttles are thrown or passed back and forth through the shed, between the yarn threads of the warp in order to weave in the weft. |
| 2 | Reed | A reed is a comb-like structure. |
| | | It determines the width and density of the warp threads. A reed is made of small metal or wooden plates with little gaps between them, these gaps provide the place for the warp threads to be passed through them. These gaps are known as reed slits. |
| 3 | Beat | A beater is a weaving tool designed to push the weft yarn securely into place to form the fabric. |
| 4 | Shed | The shed is the temporary separation between upper and lower warp yarns through which the weft is woven. |
| 5 | Heddle | A looped wire or cord with an eye in the centre through which a warp yarn is passed in a loom before going through the reed to control its movement and divide the threads. |
| 6 | Jacquard hook | The jacquard lifting mechanism performs shed formation in a jacquard weave. Jacquard hooks enable the lifting of the warp yarns to form a shed based on how each hook is connected to or tied to the warp yarns. |
| 7 | Pedal | The pedal can be another manual way by which the weaver enables shed formation by the use of leg pedals |
| 8 | Warp yarn | lengthwise yarns are called warps |
| 9 | Extra warp | Extra warp, is when a warp yarn forms a base fabric and supplementary additional warp ends are inserted and used to create a decorative pattern on top of the base cloth |
| 10 | Weft | Crosswire yarns are called the weft |
| 11 | Extra weft | Extra weft, is when a weft yarn is used to weave a base cloth and one or more additional wefts are inserted at intervals to create a decorative pattern on top of the base cloth. |

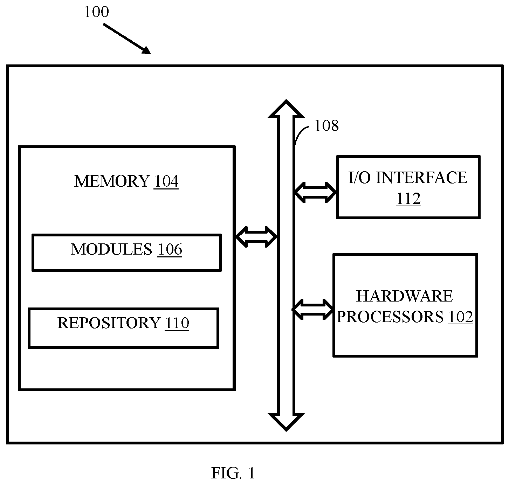

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates an exemplary system for fabric design, according to some embodiments of the present disclosure.

The system 100 includes or is otherwise in communication with hardware processors 102, at least one memory such as a memory 104, and I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of switching between hardware accelerators for model training, being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the switching between hardware accelerators for model training.

The data repository (or repository) 110 may include a plurality of abstracted piece of code for refinement and data that is processed, received, or generated as a result of the execution of the plurality of modules in the module(s) 106.

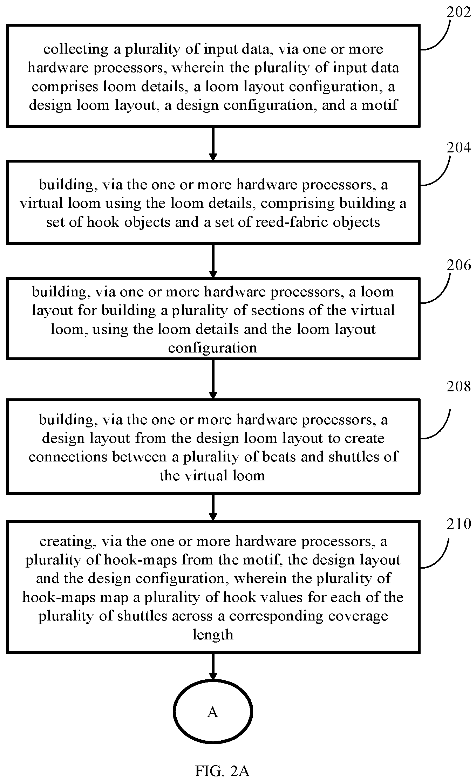

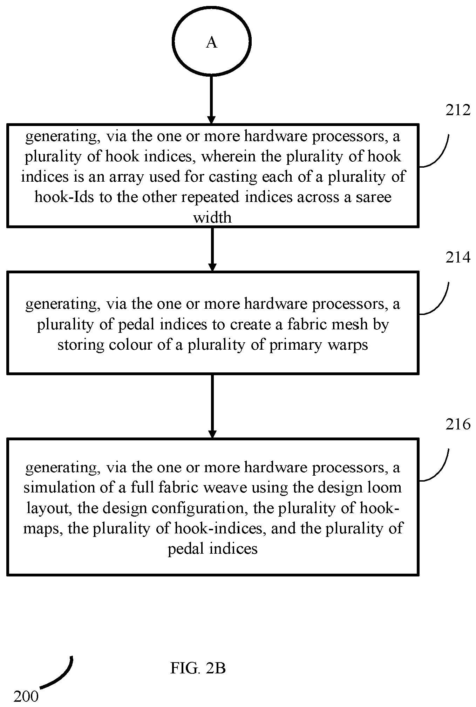

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the steps in flow diagrams in FIG. 2, FIG. 3, and FIG. 4.

FIGS. 2A and 2B illustrate an example flow diagram depicting steps involved in the process of fabric design, by the system of FIG. 1, according to some embodiments of the present disclosure.

FIGS. 2A and 2B (collectively referred to as FIG. 2) illustrate an example flow diagram depicting steps involved in the process of fabric design, by the system of FIG. 1, according to some embodiments of the present disclosure. In an embodiment, the system 100 comprises one or more data storage devices or the memory 104 operatively coupled to the processor(s) 102 and is configured to store instructions for execution of steps of a method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of the method 200, the system 100 collects a plurality of input data, via one or more hardware processors, wherein the plurality of input data comprises loom details, a loom layout configuration, a design loom layout, a design configuration, and a motif. A user of the system 100 may provide one or more of the inputs using an appropriate user interface provided by the system.

Further, at step 204 of the method 200, the system 100 builds a virtual loom, via the one or more hardware processors, using the loom details. At this step, the system 100 initializes a plurality of sections using associated values. In an embodiment, the values used for initializing each of the plurality of sections are pre-defined, and maybe received as the input data. By initializing the sections, the system 100 creates a virtual section object which includes the plurality of sections. The system 100 then obtains a plurality of loom specific information, wherein for all repeating sections, corresponding data is fetched from pre-existing information. The loom specific information includes, but is not limited to, number of design hooks, number of pedals (shafts that are used to create the fabric), width of the fabric, reed count/ reed specification (threads per inch), and physical loom ID. The pre-existing information refers to reference data that may have been collected from prior instances of virtual loom building. Further, a section object is built with each of a plurality of properties in the loom specific information.

Further, at step 206 of the method 200, the system 100 builds a loom layout via the one or more hardware processors, for building a plurality of sections of the virtual loom, using the loom details and the loom layout configuration. By building the virtual loom and the loom layout, a loom fabric base image is generated. The loom layout describes the various sections of the fabric/ saree along with the mechanics of how the design will be woven on those sections of the fabric. A typical section will have the section id, reed # where the section begins, #reeds (reed slits) in that section ( # threads/2 assuming two threads per reed slit), threading type (connection of hooks to the threads), mechanics of how the threads are controlled to produce the design ( using hooks or pedals or both), whether the section has extra warp design), hook # connected to the thread passing through the reed slit (start hook # and end hook #), information on whether the section is a repeated section across the fabric with a mapping to the unique section id, warp and extra warp color information, mapping of the section to the area of saree (top border, bottom border or body area) and finally in the case of repeat, whether the design will be mirror image or non-mirrored image), are obtained as the loom layout.

During the loom layout build, all the sections as per the loom details and loom layout config jsons are built. For this, the loom details and loom layout configuration are obtained in a suitable format, for example, in json format. From the LoomLayout config json obtained as input, the system 100 creates the corresponding virtual section structure from LoomSpec and further initializes the sections with values based on what is specified. Further, sections are built one at a time with the corresponding section property specified such as number of reeds, #warps, color, extra warps and color, hooks start and end, and threading type. If is_repeat = true, the system 100 copies the same from reference section_ID from the config file with all details and replaces the section ID with correct section_ID. A section id - map is a dictionary that stores section object against their IDs which can be accessed later. Further, based on which side (top or bottom view of the fabric) of the fabric the loom layout is being built, the warp sections are visualized as a base loom layout fabric the way the warp yarns appear tied up on the virtual loom along with their colors. In top view, the extra warp layer is visible, whereas in the bottom view, the base warp layer would be visible.

Further, at step 208 of the method 200, a design layout is built from the design loom layout, via the one or more hardware processors, to create connections between a plurality of beats and shuttles of the virtual loom. The design layout contains information on how wefts overlap on top of each other across all beats. While building the design layout, the system 100 keeps beats as columns, for the length of saree. For each shuttle ID "shuttle_id" in the design layout, the system 100 executes the following steps:
- Determining a beat range for each shuttle
- Building n-weft for each shuttle based on number of columns (beats) of the shuttle
- Connecting each weft to the corresponding beats of this shuttle i.e., <shuttle-weft-beat connection is made>, wherein each weft carries reed-in and reed-out positions individually.

Further, each of the reed-in and reed-out positions is colored with a shuttle color. **In** the design layout, the wefts in a beat are to be beaten together to form a column (Y). The X-positions are determined by the "reed-in" and "reed-out" positions. During an inspection, it may be noted that each beat contains multiple wefts, that can be iterated in order, while iterating over beats.

Further, at step 210 of the method 200, a plurality of hook-maps are created from the motif, the design layout, and the design configuration, via the one or more hardware processors, wherein the plurality of hook-maps map a plurality of hook values for each of the plurality of shuttles across a corresponding coverage length. The hook maps are mapping of the hook values for each shuttle across its coverage length (hook count*shuttle length).

Further, at step 212 of the method 200, a plurality of hook indices are generated via the one or more hardware processors, wherein the plurality of hook indices is an array used for casting each of a plurality of hook-Ids to the other repeated indices across saree width. The hook indices is an array of 1s and 0s for the design values (1 when there is a design and 0 when there is no design) that are mapped for a section of the fabric. This enables design to be woven on the fabric. In order to generate the plurality of hook indices, the system 100 initially loads design from the motif and the design layout and design config json, creating the hookmaps. The hookmaps are mapping of the plurality of hook values for each shuttle across its coverage length (hookcount*shuttle length). Further, the hook indices are generated, which is an Array which helps cast the particular hook Ids into the other repeated indices across saree width. Further, at step 214 of the method 200, a plurality of pedal indices are generated, via the one or more hardware processors, to create a fabric mesh by storing color of a plurality of primary warps. Generating the pedal indices involves the following steps. If pedals are mapped, then based on the number of pedals and where pedals are mapped (usually alternating) as "1", the color of main warps are stored to create the fabric mesh. This means the main warps color becomes raised at the positions where the pedal is present as "1".

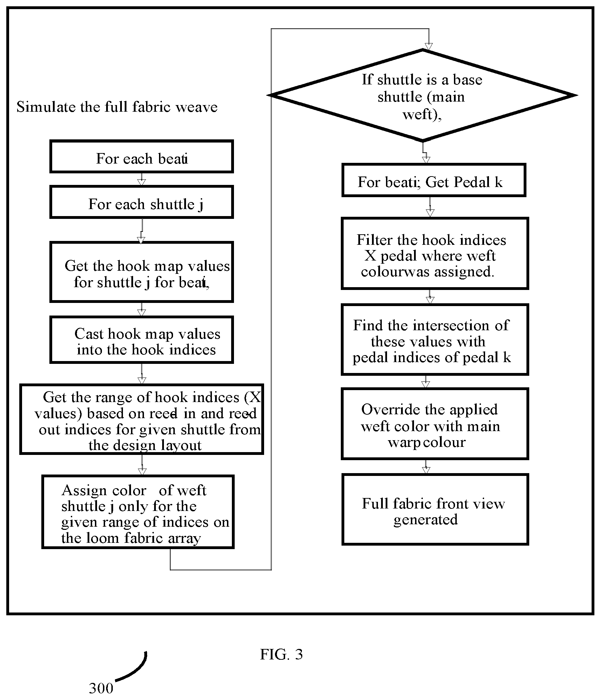

Further, at step 216 of the method 200, a simulation of a full fabric weave is generated, via the one or more hardware processors, using the design loom layout, the design configuration, the plurality of hook-maps, the plurality of hook-indices, and the plurality of pedal indices. Various steps involved in the process of simulating the full fabric are depicted in FIG. 3, and are explained hereafter.

In the process of simulating the full fabric, the system 100 performs the following steps for each beat i and shuttle j. Hook map values are obtained for shuttle j for beat i. Further, the system 100 casts the hook map values into hook indices. Further, for the shuttle j, the system 100 gets the range of hook indices (X values) based on the reed-in and reed-out indices, from the design layout. Further, the system 100 assigns the color of weft shuttle j for the range of indices, on loom fabric array. If the shuttle j is a base shuttle, for the beat i, the system 100 gets the associated pedal k. The system 100 then filters the hook indices X pedal where the weft color has been assigned, and finds intersection of the values with pedal indices of pedal k. The system 100 then overrides the applied weft color with a main warp color, thereby generating a simulation of the full fabric.

Once the simulation is generated, the system 100 may display the simulation to the user, using a suitable interface. The user may then review the design, and if not satisfied, the system 100 may provide the user with options to change values of one or more of the parameters, and the system generates corresponding design. The system 100 may also generate recommendations with respect to values of different parameters, associated with different designs generated by simulations, based on the generated simulation of the full fabric weave, so that the user may directly use the values while weaving the fabric.

The method and system in the embodiments disclosed herein make mass personalization possible at scale where users coming from anywhere can design personalized sarees that can be matched to the requirements for a physical loom and vice versa where the physical looms setup in any given state can enable personalization even within the weaving constraints they impose on the design with any layer of constraints of the physical loom in whichever state of setup it is present in. The fabric is designed as whole and the fabric layout is configurable. The fabric woven view is also simulated the way the fabric is actually woven as a whole, as opposed to motif by motif, efficiently within a pre-configured time span (for example, 3 seconds). The complexities of the physical loom setup or it's constraints need not be known to an end customer interested in personalized designs. The weaver can focus on core weaving skills which are made available as instructions. The designer can focus on enabling personalized designs for their customers through the interactive programmable visual interface for the physical loom. The loom assistant is given instructions on how to setup or make changes to the loom to enable the personalized design. Each can focus on their competency, which is also available transparently to each user as instructions via the application (which is possible as all parts and steps are modelled by the system 100).

The personalized fabric designed for each consumer can thus be unique and this can be verified by hashing the full fabric view. The unique piece as a digital twin is also minted as an Non-Fungible Token (NFT) comprising a hashing of the simulation of a full fabric weave, with the supporting design and weaving meta-information as properties that showcase value of the NFT via the uniqueness of its design and weave (such as number of jacquard cards used to weave the motif, statistical measures of the rarity of the design, colors or shades of dye used, origins of the motif, style of weaving, story of the saree, story of weaver who wove it for the customer, story of the cluster, and so on), and the design configuration. The NFT has all required technical properties that can only be possible with the approach method 200 as it has meta information about the saree, the motifs, colors, a story behind the saree and a method to verify uniqueness. Ownership for the NFT can be transferred from the minting agency (designing or selling organization) to the consumer as an asset backed token or even independently as a forgeable token that can get woven at a later point of time, i.e., between one or more entities. Through this, it is possible to provide proof of ownership, increase the value of such luxury handwoven products and enable new business models.

The jacquard machine is a precursor to the modern day computer, and the embodiments disclosed herein are configured to allow a visual programming of the virtual loom, its actions and the weaving of the fabric, making the entire system available as an interactive programmable surface that can be programmed visually, which in turn maybe applied on the physical loom. Children can learn programming through this visual programmable interface. For e.g., they can be through the visual interface used for design, which further creates the virtual loom and it's layout. Different colors or the connections may be experimented while simulating the weaving of the fabric, and how the virtual looms are woven for the design may be viewed.

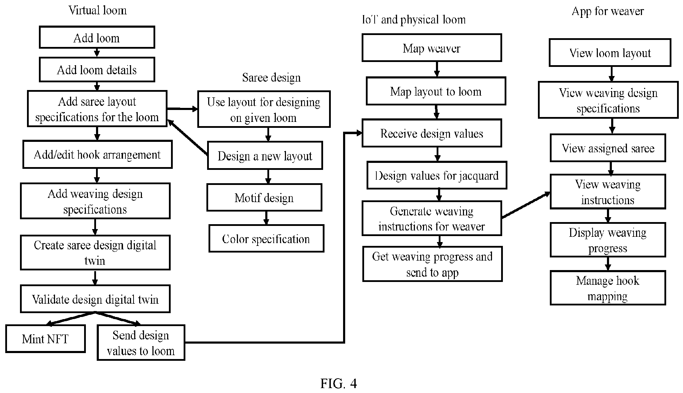

By means of the method 200, the system facilitates creating a visual programmable interface of the physical loom, which supports visual programming of all the parts of the physical loom. This approach further allows end customers, designers, weavers, loom manager to focus on core skills, without having to worry about loom or design specific constraints, as the system 100 guides them by generating the recommendations, which may also comprise information on "how" specific activities are to be performed/executed. The recommendations may also specify which shuttle color to throw, where and whether pedal is required or not, and so on. The system 100 may help the weavers and other authorized people visualize how the pattern may look like, for a given configuration. In a practical implementation, for example, as given in FIG. 4, the data maybe verifiable via Internet of Things (IoT) connection which communicates to the weavers and the other authorized people which beat is being woven and which jacquard value was passed, at any instance. All of this information may be visible as step by step instructions. A loom manager gets instructions based on loom layout. For example, which hooks are connected to which heddle and warp yarn and thereby reed. The system 100 may act as a virtual loom providing an interactive interface for the users to visualize their code as designs, and the loom may serve as an output terminal weaving generated fabric designs.

FIG. 4 illustrates data flow in an example implementation of the system of FIG. 1, for the process of fabric design, according to some embodiments of the present disclosure. In this example implementation, the design values get sent to the jacquard output and at the same time the information embedded in the design layout becomes instructions for the weaver, which may be provided to the weaver using an application that the weaver is using. The information on the loom layout becomes the instructions for a loom configurator to setup the physical loom according to the design requirement. The different stakeholders may be connected through appropriate means such as Internet of Things (IoT), which in turn facilitates mass personalization based on existing constraints.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of customized fabric design. The embodiment thus provides a method and system for simulating fabric for requirements specified in terms of values of various parameters. Moreover, the embodiments herein further provide mechanism of generating recommendations to a user (weaver), based on the simulation of the fabric.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
collecting (202) a plurality of input data, via one or more hardware processors, wherein the plurality of input data comprises loom details,
a loom layout configuration, a design loom layout, a design configuration, and a motif;
building (204), via the one or more hardware processors, a virtual loom using the loom details, comprising building a set of hook objects and a set of reed-fabric objects;
building (206), via one or more hardware processors, a loom layout for building a plurality of sections of the virtual loom, using the loom details and the loom layout configuration;
building (208), via the one or more hardware processors, a design layout from the design loom layout to create connections between a plurality of beats and shuttles of the virtual loom;
creating (210), via the one or more hardware processors, a plurality of hook-maps from the motif, the design layout and the design configuration, wherein the plurality of hook-maps map a plurality of hook values for each of the plurality of shuttles across a corresponding coverage length, wherein the design layout comprises information on how wefts overlapped on top of each other across all beats;
generating (212), via the one or more hardware processors, a plurality of hook indices, wherein the plurality of hook indices is an array used for casting each of a plurality of hook-Ids to other repeated indices across a saree width;
generating (214), via the one or more hardware processors, a plurality of pedal indices to create a fabric mesh by storing color of a plurality of primary warps, wherein when pedals are mapped, then based on the number of pedals and position of pedals being mapped as "1", the color of main warps are stored to create the fabric mesh, and wherein the color of main warps are raised at positions of the pedal present as "1"; and
generating (216), via the one or more hardware processors, a simulation of a full fabric weave using the design loom layout, the design configuration, the plurality of hook-maps, the plurality of hook-indices,
and the plurality of pedal indices, wherein the generated simulation is used for production of the full fabric weave, and wherein the generated simulation is used to check whether the full fabric weave matches to the requirements for of a physical loom of which the virtual loom is used for the simulation.

2. The method as claimed in claim 1, wherein building the loom layout comprises:
initializing a plurality of sections using associated values and creating a section class comprising the plurality of sections;
obtaining a plurality of loom specific information, wherein for all repeating sections, corresponding data is fetched from pre-existing information; and
building a section object with each of a plurality of properties in the loom specific information.

3. The method as claimed in claim 1, wherein generating the simulation of the full fabric weave comprises achieving personalization by mapping a plurality of user requirements to loom constraints.

4. The method as claimed in claim 1, wherein one or more recommendations with respect to values corresponding to designs generated by the simulation, are generated based on the generated simulation of the full fabric weave, wherein the one or more recommendations comprises information associated with specific activities which are to be executed.

5. The method as claimed in claim 1, comprising generating a verifiable Non-Fungible Token (NFT) comprising a hashing of the simulation of a full fabric weave with associated supporting design and weaving meta-information as properties showcasing value of a token in terms of uniqueness of associated design and weave, and the design configuration, wherein the verifiable NFT is transferrable between one or more entities.

6. A system (100), comprising:
one or more hardware processors (104);
a communication interface (112); and
a memory (102) storing a plurality of instructions, wherein the plurality of instructions, which when executed by the one or more hardware processors, cause the one or more hardware processors to
collect a plurality of input data, wherein the plurality of input data comprises loom details, a loom layout configuration, a design loom layout, a design configuration, and a motif;
build a virtual loom using the loom details, by building a set of hook objects and a set of reed-fabric objects;
build a loom layout for building a plurality of sections of the virtual loom, using the loom details and the loom layout configuration;
build a design layout from the design loom layout to create connections between a plurality of beats and shuttles of the virtual loom;
create a plurality of hook-maps from the motif, the design layout and the design configuration, wherein the plurality of hook-maps map a plurality of hook values for each of the plurality of shuttles across a corresponding coverage length, wherein the design layout comprises information on how wefts
overlapped on top of each other across all beats;
generate a plurality of hook indices, wherein the plurality of hook indices is an array used for casting each of a plurality of hook-Ids to other repeated indices across a saree width;
generate a plurality of pedal indices to create a fabric mesh by storing color of a plurality of primary warps, wherein when pedals are mapped, then based on the number of pedals and position of pedals being mapped as "1", the color of main warps are stored to create the fabric mesh, and wherein the color of main warps are raised at positions of the pedal present as "1"; and
generate a simulation of a full fabric weave using the design loom layout, the design configuration, the plurality of hook-maps, the plurality of hook-indices, and the plurality of pedal indices, wherein the generated simulation is used for production of the full fabric weave, and wherein the generated simulation is used to check whether the full fabric weave matches to the requirements for a physical loom of which the virtual loom is used for the simulation.

7. The system as claimed in claim 6, wherein the one or more hardware processors are configured to build the loom layout by:
initializing a plurality of sections using associated values and creating a section class comprising the plurality of sections;
obtaining a plurality of loom specific information, wherein for all repeating sections, corresponding data is fetched from pre-existing information; and
building a section object with each of a plurality of properties in the loom specific information.

8. The system as claimed in claim 6, wherein the one or more hardware processors are configured to generate the simulation of the full fabric weave by achieving personalization by mapping a plurality of user requirements to loom constraints.

9. The system as claimed in claim 6, wherein the one or more hardware processors are configured to generate one or more recommendations with respect to values corresponding to designs generated by the simulation, based on the generated simulation of the full fabric weave, wherein the one or more recommendations comprises information associated with specific activities which are to be executed.

10. The system as claimed in claim 6, wherein the one or more hardware processors are configured to generate a verifiable Non-Fungible Token (NFT) comprising a hashing of the simulation of a full fabric weave with associated supporting design and weaving meta-information as properties showcasing value of a token in terms of uniqueness of associated design and weave, and the design configuration, wherein the verifiable NFT is transferrable between one or more entities.

11. One or more non-transitory machine-readable information storage mediums comprising one or more instructions which when executed by one or more hardware processors, cause the one or more hardware processors to:
collect a plurality of input data, wherein the plurality of input data comprises loom details, a loom layout configuration, a design loom layout, a design configuration, and a motif;
build a virtual loom using the loom details, comprising building a set of hook objects and a set of reed-fabric objects;
build a loom layout for building a plurality of sections of the virtual loom, using the loom details and the loom layout configuration;
build a design layout from the design loom layout to create connections between a plurality of beats and shuttles of the virtual loom;
create a plurality of hook-maps from the motif, the design layout and the design configuration, wherein the plurality of hook-maps map a plurality of hook values for each of the plurality of shuttles across a corresponding coverage length, wherein the design layout comprises information on how wefts overlapped on top of each other across all beats;
generate a plurality of hook indices, wherein the plurality of hook indices is an array used for casting each of a plurality of hook-Ids to other repeated indices across a saree width;
generate a plurality of pedal indices to create a fabric mesh by storing color of a plurality of primary warps, wherein when pedals are mapped, then based on the number of pedals and position of pedals being mapped as "1", the color of main warps are stored to create the fabric mesh, and wherein the color of main warps are raised at positions of the pedal present as "1"; and
generate a simulation of a full fabric weave using the design loom layout, the design configuration, the plurality of hook-maps, the plurality of hook-indices, and the plurality of pedal indices, wherein the generated simulation is used for production of the full fabric weave, and wherein the generated simulation is used to check whether the full fabric weave matches to the requirements for a physical loom of which the virtual loom is used for the simulation.

12. The one or more non-transitory machine-readable information storage mediums as claimed in claim 11, wherein building the loom layout comprises:
initializing a plurality of sections using associated values and creating a section class comprising the plurality of sections;
obtaining a plurality of loom specific information, wherein for all repeating sections, corresponding data is fetched from pre-existing information; and
building a section object with each of a plurality of properties in the loom specific information.

13. The one or more non-transitory machine-readable information storage mediums as claimed in claim 11, wherein generating the simulation of the full fabric weave comprises achieving personalization by mapping a plurality of user requirements to loom constraints.

14. The one or more non-transitory machine-readable information storage mediums as claimed in claim 11, wherein one or more recommendations with respect to values corresponding to designs generated by the simulation, are generated based on the generated simulation of the full fabric weave, wherein the one or more recommendations comprises information associated with specific activities which are to be executed.

15. The one or more non-transitory machine-readable information storage mediums as claimed in claim 11, wherein the one or more instructions which when executed by the one or more hardware processors cause generating a verifiable Non-Fungible Token (NFT) comprising a hashing of the simulation of a full fabric weave with associated supporting design and weaving meta-information as properties showcasing value of a token in terms of uniqueness of associated design and weave, and the design configuration, wherein the verifiable NFT is transferrable between one or more entities.

## Patentansprüche

1. Prozessorimplementiertes Verfahren (200), umfassend:
Sammeln (202) einer Mehrzahl von Eingabedaten über einen oder mehrere Hardwareprozessoren, wobei die Mehrzahl von Eingabedaten Webstuhldetails, eine Webstuhllayoutkonfiguration, ein Entwurfswebstuhllayout, eine Entwurfskonfiguration und ein Motiv umfasst;
Aufbauen (204), über den einen oder die mehreren Hardwareprozessoren, eines virtuellen Webstuhls unter Verwendung der Webstuhldetails, umfassend das Aufbauen eines Satzes von Hakenobjekten und eines Satzes von Rietgewebeobjekten;
Aufbauen (206), über einen oder mehrere Hardwareprozessoren, eines Webstuhllayouts zum Aufbauen einer Mehrzahl von Abschnitten des virtuellen Webstuhls unter Verwendung der Webstuhldetails und der Webstuhllayoutkonfiguration;
Aufbauen (208), über den einen oder die mehreren Hardwareprozessoren, eines Entwurfslayouts aus dem Entwurfswebstuhllayout, um Verbindungen zwischen einer Mehrzahl von Schlägen und Shuttles des virtuellen Webstuhls zu erzeugen;
Erzeugen (210), über den einen oder die mehreren Hardwareprozessoren, einer Mehrzahl von Hakenkarten aus dem Motiv, dem Entwurfslayout und der Entwurfskonfiguration, wobei die Mehrzahl von Hakenkarten eine Mehrzahl von Hakenwerten für jedes der Mehrzahl von Shuttles über eine entsprechende Abdeckungslänge abbildet, wobei das Entwurfslayout Informationen darüber umfasst, wie Schussfäden sich über alle Schläge übereinander überlappten;
Erzeugen (212), über den einen oder die mehreren Hardwareprozessoren, einer Mehrzahl von Hakenindizes, wobei die Mehrzahl von Hakenindizes ein Array ist, das verwendet wird, um jede einer Mehrzahl von Haken-Ids auf andere wiederholte Indizes über eine Saebreite zu verteilen;
Erzeugen (214), über den einen oder die mehreren Hardwareprozessoren, einer Mehrzahl von Pedalindizes, um ein Gewebenetz durch Speichern einer Farbe einer Mehrzahl von primären Kettfäden zu erzeugen, wobei, wenn Pedale abgebildet werden, dann basierend auf der Anzahl von Pedalen und der Position von Pedalen, die als "1" abgebildet werden, die Farbe von Hauptkettfäden gespeichert wird, um das Gewebenetz zu erzeugen, und wobei die Farbe von Hauptkettfäden an Positionen des Pedals, die als "1" vorhanden sind, erhöht wird; und
Erzeugen (216), über den einen oder die mehreren Hardwareprozessoren, einer Simulation einer vollständigen Gewebebindung unter Verwendung des Entwurfswebstuhllayouts, der Entwurfskonfiguration, der Mehrzahl von Hakenkarten, der Mehrzahl von Hakenindizes und der Mehrzahl von Pedalindizes, wobei die erzeugte Simulation zur Produktion der vollständigen Gewebebindung verwendet wird, und wobei die erzeugte Simulation verwendet wird, um zu prüfen, ob die vollständige Gewebebindung mit den Anforderungen für einen physischen Webstuhl übereinstimmt, von dem der virtuelle Webstuhl für die Simulation verwendet wird.

2. Verfahren nach Anspruch 1, wobei das Aufbauen des Webstuhllayouts umfasst:
Initialisieren einer Mehrzahl von Abschnitten unter Verwendung zugehöriger Werte und Erzeugen einer Abschnittsklasse, die die Mehrzahl von Abschnitten umfasst;
Erhalten einer Mehrzahl von webstuhlspezifischen Informationen, wobei für alle sich wiederholenden Abschnitte entsprechende Daten aus bereits vorhandenen Informationen abgerufen werden; und
Aufbauen eines Abschnittsobjekts mit jeder einer Mehrzahl von Eigenschaften in den webstuhlspezifischen Informationen.

3. Verfahren nach Anspruch 1, wobei das Erzeugen der Simulation der vollständigen Gewebebindung das Erreichen einer Personalisierung durch Abbilden einer Mehrzahl von Benutzeranforderungen auf Webstuhlbeschränkungen umfasst.

4. Verfahren nach Anspruch 1, wobei eine oder mehrere Empfehlungen in Bezug auf Werte, die Entwürfen entsprechen, die durch die Simulation erzeugt werden, basierend auf der erzeugten Simulation der vollständigen Gewebebindung erzeugt werden, wobei die eine oder die mehreren Empfehlungen Informationen umfassen, die spezifischen Aktivitäten zugeordnet sind, die ausgeführt werden sollen.

5. Verfahren nach Anspruch 1, umfassend das Erzeugen eines verifizierbaren nicht-fungible Tokens (NFT), umfassend ein Hashing der Simulation einer vollständigen Gewebebindung mit zugehörigen unterstützenden Entwurfs- und Webmetainformationen als Eigenschaften, die den Wert eines Tokens in Bezug auf die Einzigartigkeit des zugehörigen Entwurfs und der zugehörigen Bindung und die Entwurfskonfiguration zeigen, wobei der verifizierbare NFT zwischen einer oder mehreren Entitäten übertragen werden kann.

6. System (100), umfassend:
einen oder mehrere Hardwareprozessoren (104);
eine Kommunikationsschnittstelle (112); und
einen Speicher (102), der eine Mehrzahl von Anweisungen speichert, wobei die Mehrzahl von Anweisungen, wenn sie durch den einen oder die mehreren Hardwareprozessoren ausgeführt werden, den einen oder die mehreren Hardwareprozessoren zu Folgendem veranlassen:
Sammeln einer Mehrzahl von Eingabedaten, wobei die Mehrzahl von Eingabedaten Webstuhldetails, eine Webstuhllayoutkonfiguration, ein Entwurfswebstuhllayout, eine Entwurfskonfiguration und ein Motiv umfasst;
Aufbauen eines virtuellen Webstuhls unter Verwendung der Webstuhldetails durch Aufbauen eines Satzes von Hakenobjekten und eines Satzes von Rietgewebeobjekten;
Aufbauen eines Webstuhllayouts zum Aufbauen einer Mehrzahl von Abschnitten des virtuellen Webstuhls unter Verwendung der Webstuhldetails und der Webstuhllayoutkonfiguration;
Aufbauen eines Entwurfslayouts aus dem Entwurfswebstuhllayout, um Verbindungen zwischen einer Mehrzahl von Schlägen und Shuttles des virtuellen Webstuhls zu erzeugen;
Erzeugen einer Mehrzahl von Hakenkarten aus dem Motiv, dem Entwurfslayout und der Entwurfskonfiguration, wobei die Mehrzahl von Hakenkarten eine Mehrzahl von Hakenwerten für jedes der Mehrzahl von Shuttles über eine entsprechende Abdeckungslänge abbildet, wobei das Entwurfslayout Informationen darüber umfasst, wie Schussfäden sich über alle Schläge übereinander überlappten;
Erzeugen einer Mehrzahl von Hakenindizes, wobei die Mehrzahl von Hakenindizes ein Array ist, das verwendet wird, um jede einer Mehrzahl von Haken-Ids auf andere wiederholte Indizes über eine Saebreite zu verteilen;
Erzeugen einer Mehrzahl von Pedalindizes, um ein Gewebenetz durch Speichern einer Farbe einer Mehrzahl von primären Kettfäden zu erzeugen, wobei, wenn Pedale abgebildet werden, dann basierend auf der Anzahl von Pedalen und der Position von Pedalen, die als "1" abgebildet werden, die Farbe von Hauptkettfäden gespeichert wird, um das Gewebenetz zu erzeugen, und wobei die Farbe von Hauptkettfäden an Positionen des Pedals, die als "1" vorhanden sind, erhöht wird; und
Erzeugen einer Simulation einer vollständigen Gewebebindung unter Verwendung des Entwurfswebstuhllayouts, der Entwurfskonfiguration, der Mehrzahl von Hakenkarten, der Mehrzahl von Hakenindizes und der Mehrzahl von Pedalindizes, wobei die erzeugte Simulation zur Produktion der vollständigen Gewebebindung verwendet wird, und wobei die erzeugte Simulation verwendet wird, um zu prüfen, ob die vollständige Gewebebindung mit den Anforderungen für einen physischen Webstuhl übereinstimmt, von dem der virtuelle Webstuhl für die Simulation verwendet wird.

7. System nach Anspruch 6, wobei der eine oder die mehreren Hardwareprozessoren konfiguriert sind, um das Webstuhllayout aufzubauen durch:
Initialisieren einer Mehrzahl von Abschnitten unter Verwendung zugehöriger Werte und Erzeugen einer Abschnittsklasse, die die Mehrzahl von Abschnitten umfasst;
Erhalten einer Mehrzahl von webstuhlspezifischen Informationen, wobei für alle sich wiederholenden Abschnitte entsprechende Daten aus bereits vorhandenen Informationen abgerufen werden; und
Aufbauen eines Abschnittsobjekts mit jeder einer Mehrzahl von Eigenschaften in den webstuhlspezifischen Informationen.

8. System nach Anspruch 6, wobei der eine oder die mehreren Hardwareprozessoren konfiguriert sind, um die Simulation der vollständigen Gewebebindung durch Erreichen einer Personalisierung durch Abbilden einer Mehrzahl von Benutzeranforderungen auf Webstuhlbeschränkungen zu erzeugen.

9. System nach Anspruch 6, wobei der eine oder die mehreren Hardwareprozessoren konfiguriert sind, um eine oder mehrere Empfehlungen in Bezug auf Werte, die Entwürfen entsprechen, die durch die Simulation erzeugt werden, basierend auf der erzeugten Simulation der vollständigen Gewebebindung zu erzeugen, wobei eine oder die mehreren Empfehlungen Informationen umfassen, die spezifischen Aktivitäten zugeordnet sind, die ausgeführt werden sollen.

10. System nach Anspruch 6, wobei der eine oder die mehreren Hardwareprozessoren konfiguriert sind, um einen verifizierbaren nicht-fungible Token (NFT) zu erzeugen, umfassend ein Hashing der Simulation einer vollständigen Gewebebindung mit zugehörigen unterstützenden Entwurfs- und Webmetainformationen als Eigenschaften, die den Wert eines Tokens in Bezug auf die Einzigartigkeit des zugehörigen Entwurfs und der zugehörigen Bindung und die Entwurfskonfiguration zeigen, wobei der verifizierbare NFT zwischen einer oder mehreren Entitäten übertragen werden kann.

11. Ein oder mehrere nichtflüchtige maschinenlesbare Informationsspeichermedien, umfassend eine oder mehrere Anweisungen, die, wenn sie durch einen oder mehrere Hardwareprozessoren ausgeführt werden, den einen oder die mehreren Hardwareprozessoren zu Folgendem veranlassen:
Sammeln Mehrzahl von Eingabedaten, wobei die Mehrzahl von Eingabedaten Webstuhldetails, eine Webstuhllayoutkonfiguration, ein Entwurfswebstuhllayout, eine Entwurfskonfiguration und ein Motiv umfasst;
Aufbauen eines virtuellen Webstuhls unter Verwendung der Webstuhldetails, umfassend das Aufbauen eines Satzes von Hakenobjekten und eines Satzes von Rietgewebeobjekten;
Aufbauen eines Webstuhllayouts zum Aufbauen einer Mehrzahl von Abschnitten des virtuellen Webstuhls unter Verwendung der Webstuhldetails und der Webstuhllayoutkonfiguration;
Aufbauen eines Entwurfslayouts aus dem Entwurfswebstuhllayout, um Verbindungen zwischen einer Mehrzahl von Schlägen und Shuttles des virtuellen Webstuhls zu erzeugen;
Erzeugen einer Mehrzahl von Hakenkarten aus dem Motiv, dem Entwurfslayout und der Entwurfskonfiguration, wobei die Mehrzahl von Hakenkarten eine Mehrzahl von Hakenwerten für jedes der Mehrzahl von Shuttles über eine entsprechende Abdeckungslänge abbildet, wobei das Entwurfslayout Informationen darüber umfasst, wie Schussfäden sich über alle Schläge übereinander überlappten;
Erzeugen einer Mehrzahl von Hakenindizes, wobei die Mehrzahl von Hakenindizes ein Array ist, das verwendet wird, um jede einer Mehrzahl von Haken-Ids auf andere wiederholte Indizes über eine Saebreite zu verteilen;
Erzeugen einer Mehrzahl von Pedalindizes, um ein Gewebenetz durch Speichern einer Farbe einer Mehrzahl von primären Kettfäden zu erzeugen, wobei, wenn Pedale abgebildet werden, dann basierend auf der Anzahl von Pedalen und der Position von Pedalen, die als "1" abgebildet werden, die Farbe von Hauptkettfäden gespeichert wird, um das Gewebenetz zu erzeugen, und wobei die Farbe von Hauptkettfäden an Positionen des Pedals, die als "1" vorhanden sind, erhöht wird; und
Erzeugen einer Simulation einer vollständigen Gewebebindung unter Verwendung des Entwurfswebstuhllayouts, der Entwurfskonfiguration, der Mehrzahl von Hakenkarten, der Mehrzahl von Hakenindizes und der Mehrzahl von Pedalindizes, wobei die erzeugte Simulation zur Produktion der vollständigen Gewebebindung verwendet wird, und wobei die erzeugte Simulation verwendet wird, um zu prüfen, ob die vollständige Gewebebindung mit den Anforderungen für einen physischen Webstuhl übereinstimmt, von dem der virtuelle Webstuhl für die Simulation verwendet wird.

12. Ein oder mehrere nichtflüchtige maschinenlesbare Informationsspeichermedien nach Anspruch 11, wobei das Aufbauen des Webstuhllayouts umfasst:
Initialisieren einer Mehrzahl von Abschnitten unter Verwendung zugehöriger Werte und Erzeugen einer Abschnittsklasse, die die Mehrzahl von Abschnitten umfasst;
Erhalten einer Mehrzahl von webstuhlspezifischen Informationen, wobei für alle sich wiederholenden Abschnitte entsprechende Daten aus bereits vorhandenen Informationen abgerufen werden; und
Aufbauen eines Abschnittsobjekts mit jeder einer Mehrzahl von Eigenschaften in den webstuhlspezifischen Informationen.

13. Ein oder mehrere nichtflüchtige maschinenlesbare Informationsspeichermedien nach Anspruch 11, wobei das Erzeugen der Simulation der vollständigen Gewebebindung das Erreichen einer Personalisierung durch Abbilden einer Mehrzahl von Benutzeranforderungen auf Webstuhlbeschränkungen umfasst.

14. Ein oder mehrere nichtflüchtige maschinenlesbare Informationsspeichermedien nach Anspruch 11, wobei eine oder mehrere Empfehlungen in Bezug auf Werte, die Entwürfen entsprechen, die durch die Simulation erzeugt werden, basierend auf der erzeugten Simulation der vollständigen Gewebebindung erzeugt werden, wobei die eine oder die mehreren Empfehlungen Informationen umfassen, die spezifischen Aktivitäten zugeordnet sind, die ausgeführt werden sollen.

15. Ein oder mehrere nichtflüchtige maschinenlesbare Informationsspeichermedien nach Anspruch 11, wobei die eine oder die mehreren Anweisungen, wenn sie durch den einen oder die mehreren Hardwareprozessoren ausgeführt werden, das Erzeugen eines verifizierbaren nicht-fungible Tokens (NFT) veranlassen, umfassend ein Hashing der Simulation einer vollständigen Gewebebindung mit zugehörigen unterstützenden Entwurfs- und Webmetainformationen als Eigenschaften, die den Wert eines Tokens in Bezug auf die Einzigartigkeit des zugehörigen Entwurfs und der zugehörigen Bindung und die Entwurfskonfiguration zeigen, wobei der verifizierbare NFT zwischen einer oder mehreren Entitäten übertragen werden kann.

## Revendications

1. Procédé mis en œuvre par processeur (200), comprenant :
la collecte (202) d'une pluralité de données d'entrée, via un ou plusieurs processeurs matériels, dans lequel la pluralité de données d'entrée comprend des détails de métier à tisser, une configuration de disposition de métier à tisser, une disposition de dessin de métier à tisser, une configuration de dessin et un motif ;
la construction (204), via les un ou plusieurs processeurs matériels, d'un métier à tisser virtuel en utilisant les détails de métier à tisser, comprenant la construction d'un ensemble d'objets de crochet et d'un ensemble d'objets peigne-tissu ;
la construction (206), via un ou plusieurs processeurs matériels, d'une disposition de métier à tisser pour construire une pluralité de sections du métier à tisser virtuel, en utilisant les détails de métier à tisser et la configuration de disposition de métier à tisser ;
la construction (208), via les un ou plusieurs processeurs matériels, d'une disposition de dessin à partir de la disposition de dessin de métier à tisser pour créer des connexions entre une pluralité de coups de battant et des navettes du métier à tisser virtuel ;
la création (210), via les un ou plusieurs processeurs matériels, d'une pluralité de tables de correspondance de crochets à partir du motif, de la disposition de dessin et de la configuration de dessin, dans lequel la pluralité de tables de correspondance de crochets font correspondre une pluralité de valeurs de crochets pour chacune de la pluralité de navettes sur une longueur de couverture correspondante, dans lequel la disposition de dessin comprend des informations sur la façon dont des trames se chevauchent les unes sur les autres sur tous les coups de battant ;
la génération (212), via les un ou plusieurs processeurs matériels, d'une pluralité d'indices de crochet, dans lequel la pluralité d'indices de crochet est un tableau utilisé pour faire correspondre chacun d'une pluralité d'identifiants de crochet à d'autres indices répétés sur la largeur du sari ;
la génération (214), via les un ou plusieurs processeurs matériels, d'une pluralité d'indices de pédale pour créer un maillage de tissu en stockant une couleur d'une pluralité de chaînes primaires, dans lequel lorsque des pédales sont mappées, puis sur la base du nombre de pédales et de la position de pédales qui sont mappées en tant que « 1 », la couleur de chaînes principales est stockée pour créer le maillage de tissu, et dans lequel la couleur de chaînes principales est élevée à des positions de la pédale présentes en tant que « 1 » ; et
la génération (216), via les un ou plusieurs processeurs matériels, d'une simulation d'un tissage de tissu complet en utilisant la disposition de dessin de métier à tisser, la configuration de dessin, la pluralité de tables de correspondance de crochets, la pluralité d'indices de crochet et la pluralité d'indices de pédale, dans lequel la simulation générée est utilisée pour la production du tissage de tissu complet, et dans lequel la simulation générée est utilisée pour vérifier si le tissage de tissu complet correspond aux exigences pour un métier à tisser physique dont le métier à tisser virtuel est utilisé pour la simulation.

2. Procédé selon la revendication 1, dans lequel la construction de la disposition de métier à tisser comprend :
l'initialisation d'une pluralité de sections en utilisant des valeurs associées et la création d'une classe de section comprenant la pluralité de sections ;
l'obtention d'une pluralité d'informations spécifiques de métier à tisser, dans lequel pour toutes les sections répétitives, des données correspondantes sont récupérées à partir d'informations préexistantes ; et
la construction d'un objet de section avec chacune d'une pluralité de propriétés dans les informations spécifiques de métier à tisser.

3. Procédé selon la revendication 1, dans lequel la génération de la simulation du tissage de tissu complet comprend la réalisation d'une personnalisation en mettant en correspondance une pluralité d'exigences d'utilisateur avec des contraintes de métier à tisser.

4. Procédé selon la revendication 1, dans lequel une ou plusieurs recommandations par rapport à des valeurs correspondant à des dessins générés par la simulation, sont générées sur la base de la simulation générée du tissage de tissu complet, dans lequel une ou plusieurs recommandations comprennent des informations associées à des activités spécifiques qui doivent être exécutées.

5. Procédé selon la revendication 1, comprenant la génération d'un jeton non fongible (NFT) vérifiable comprenant un hachage de la simulation d'un tissage de tissu complet avec des méta-informations associées relatives au dessin et au tissage en tant que propriétés présentant une valeur d'un jeton en termes d'unicité de dessin et de tissage associés, et la configuration de dessin, dans lequel le NFT vérifiable est transférable entre une ou plusieurs entités.

6. Système (100), comprenant :
un ou plusieurs processeurs matériels (104) ;
une interface de communication (112) ; et
une mémoire (102) stockant une pluralité d'instructions, dans lequel la pluralité d'instructions, qui lorsqu'elles sont exécutées par les un ou plusieurs processeurs matériels, amènent les un ou plusieurs processeurs matériels à :
collecter une pluralité de données d'entrée, dans lequel la pluralité de données d'entrée comprend des détails de métier à tisser, une configuration de disposition de métier à tisser, une disposition de dessin de métier à tisser, une configuration de dessin et un motif ;
construire un métier à tisser virtuel en utilisant les détails de métier à tisser, en construisant un ensemble d'objets de crochet et un ensemble d'objets peigne-tissu ;
construire une disposition de métier à tisser pour construire une pluralité de sections du métier à tisser virtuel, en utilisant les détails de métier à tisser et la configuration de disposition de métier à tisser ;
construire une disposition de dessin à partir de la disposition de dessin de métier à tisser pour créer des connexions entre une pluralité de coups de battant et des navettes du métier à tisser virtuel ;
créer une pluralité de tables de correspondance de crochets à partir du motif, de la disposition de dessin et de la configuration de dessin, dans lequel la pluralité de tables de correspondance de crochets font correspondre une pluralité de valeurs de crochets pour chacune de la pluralité de navettes sur une longueur de couverture correspondante, dans lequel la disposition de dessin comprend des informations sur la façon dont des trames se chevauchent les unes sur les autres sur tous les coups de battant ;
générer une pluralité d'indices de crochet, dans lequel la pluralité d'indices de crochet est un tableau utilisé pour faire correspondre chacun d'une pluralité d'identifiants de crochet à d'autres indices répétés sur la largeur du sari ;
générer une pluralité d'indices de pédale pour créer un maillage de tissu en stockant une couleur d'une pluralité de chaînes primaires, dans lequel lorsque des pédales sont mappées, puis sur la base du nombre de pédales et de la position de pédales qui sont mappées en tant que « 1 », la couleur de chaînes principales est stockée pour créer le maillage de tissu, et dans lequel la couleur de chaînes principales est élevée à des positions de la pédale présentes en tant que « 1 » ; et
générer une simulation d'un tissage de tissu complet en utilisant la disposition de dessin de métier à tisser, la configuration de dessin, la pluralité de tables de correspondance de crochets, la pluralité d'indices de crochet et la pluralité d'indices de pédale, dans lequel la simulation générée est utilisée pour la production du tissage de tissu complet, et dans lequel la simulation générée est utilisée pour vérifier si le tissage de tissu complet correspond aux exigences pour un métier à tisser physique dont le métier à tisser virtuel est utilisé pour la simulation.

7. Système selon la revendication 6, dans lequel les un ou plusieurs processeurs matériels sont configurés pour construire la disposition de métier à tisser en :
initialisant une pluralité de sections en utilisant des valeurs associées et créant une classe de section comprenant la pluralité de sections ;
obtenant une pluralité d'informations spécifiques de métier à tisser, dans lequel pour toutes les sections répétitives, des données correspondantes sont récupérées à partir d'informations préexistantes ; et
construisant un objet de section avec chacune d'une pluralité de propriétés dans les informations spécifiques de métier à tisser.

8. Système selon la revendication 6, dans lequel les un ou plusieurs processeurs matériels sont configurés pour générer la simulation du tissage de tissu complet en réalisant une personnalisation en mettant en correspondance une pluralité d'exigences d'utilisateur avec des contraintes de métier à tisser.

9. Système selon la revendication 6, dans lequel les un ou plusieurs processeurs matériels sont configurés pour générer une ou plusieurs recommandations par rapport à des valeurs correspondant à des dessins générés par la simulation, sur la base de la simulation générée du tissage de tissu complet, dans lequel une ou plusieurs recommandations comprennent des informations associées à des activités spécifiques qui doivent être exécutées.

10. Système selon la revendication 6, dans lequel les un ou plusieurs processeurs matériels sont configurés pour générer un jeton non fongible (NFT) vérifiable comprenant un hachage de la simulation d'un tissage de tissu complet avec des méta-informations associées relatives au dessin et au tissage en tant que propriétés présentant une valeur d'un jeton en termes d'unicité de dessin et de tissage associés, et la configuration de dessin, dans lequel le NFT vérifiable est transférable entre une ou plusieurs entités.

11. Un ou plusieurs supports de stockage d'informations lisibles par machine non transitoires comprenant une ou plusieurs instructions qui lorsqu'elles sont exécutées par un ou plusieurs processeurs matériels, amènent les un ou plusieurs processeurs matériels à :
collecter une pluralité de données d'entrée, dans lequel la pluralité de données d'entrée comprend des détails de métier à tisser, une configuration de disposition de métier à tisser, une disposition de dessin de métier à tisser, une configuration de dessin et un motif ;
construire un métier à tisser virtuel en utilisant les détails de métier à tisser, comprenant la construction d'un ensemble d'objets de crochet et d'un ensemble d'objets peigne-tissu ;
construire une disposition de métier à tisser pour construire une pluralité de sections du métier à tisser virtuel, en utilisant les détails de métier à tisser et la configuration de disposition de métier à tisser ;
construire une disposition de dessin à partir de la disposition de dessin de métier à tisser pour créer des connexions entre une pluralité de coups de battant et des navettes du métier à tisser virtuel ;
créer une pluralité de tables de correspondance de crochets à partir du motif, de la disposition de dessin et de la configuration de dessin, dans lequel la pluralité de tables de correspondance de crochets font correspondre une pluralité de valeurs de crochets pour chacune de la pluralité de navettes sur une longueur de couverture correspondante, dans lequel la disposition de dessin comprend des informations sur la façon dont des trames se chevauchent les unes sur les autres sur tous les coups de battant ;
générer une pluralité d'indices de crochet, dans lequel la pluralité d'indices de crochet est un tableau utilisé pour faire correspondre chacun d'une pluralité d'identifiants de crochet à d'autres indices répétés sur la largeur du sari ;
générer une pluralité d'indices de pédale pour créer un maillage de tissu en stockant une couleur d'une pluralité de chaînes primaires, dans lequel lorsque des pédales sont mappées, puis sur la base du nombre de pédales et de la position de pédales qui sont mappées en tant que « 1 », la couleur de chaînes principales est stockée pour créer le maillage de tissu, et dans lequel la couleur de chaînes principales est élevée à des positions de la pédale présentes en tant que « 1 » ; et
générer une simulation d'un tissage de tissu complet en utilisant la disposition de dessin de métier à tisser, la configuration de dessin, la pluralité de tables de correspondance de crochets, la pluralité d'indices de crochet et la pluralité d'indices de pédale, dans lequel la simulation générée est utilisée pour la production du tissage de tissu complet, et dans lequel la simulation générée est utilisée pour vérifier si le tissage de tissu complet correspond aux exigences pour un métier à tisser physique dont le métier à tisser virtuel est utilisé pour la simulation.

12. Un ou plusieurs supports de stockage d'informations lisibles par machine non transitoires selon la revendication 11, dans lequel la construction de la disposition de métier à tisser comprend :
l'initialisation d'une pluralité de sections en utilisant des valeurs associées et la création d'une classe de section comprenant la pluralité de sections ;
l'obtention d'une pluralité d'informations spécifiques de métier à tisser, dans lequel pour toutes les sections répétitives, des données correspondantes sont récupérées à partir d'informations préexistantes ; et
la construction d'un objet de section avec chacune d'une pluralité de propriétés dans les informations spécifiques de métier à tisser.

13. Un ou plusieurs supports de stockage d'informations lisibles par machine non transitoires selon la revendication 11, dans lequel la génération de la simulation du tissage de tissu complet comprend la réalisation d'une personnalisation en mettant en correspondance une pluralité d'exigences d'utilisateur avec des contraintes de métier à tisser.

14. Un ou plusieurs supports de stockage d'informations lisibles par machine non transitoires selon la revendication 11, dans lequel une ou plusieurs recommandations par rapport à des valeurs correspondant à des dessins générés par la simulation, sont générées sur la base de la simulation générée du tissage de tissu complet, dans lequel une ou plusieurs recommandations comprennent des informations associées à des activités spécifiques qui doivent être exécutées.

15. Un ou plusieurs supports de stockage d'informations lisibles par machine non transitoires selon la revendication 11, dans lequel les une ou plusieurs instructions qui lorsqu'elles sont exécutées par les un ou plusieurs processeurs matériels amènent la génération d'un jeton non fongible (NFT) vérifiable comprenant un hachage de la simulation d'un tissage de tissu complet avec des méta-informations associées relatives au dessin et au tissage en tant que propriétés présentant une valeur d'un jeton en termes d'unicité de dessin et de tissage associés, et la configuration de dessin, dans lequel le NFT vérifiable est transférable entre une ou plusieurs entités.
